# EUROPEAN PATENT APPLICATION

(11) **EP 4 224 677 A1**
(43) Date of publication of application: **09.08.2023**
(21) Application number: 22155191.4
(22) Date of filing: 04.02.2022
(51) Int. Cl.: H02K 1/18, H02K 5/06

(54) **ELECTRIC MACHINE**

(71) Applicant: MAHLE International GmbH, 70376 Stuttgart (DE)
(72) Inventor: DRNOVSEK, Dr. Bostjan, 1230 Domzale (SI); Gorkic, David, 5290 Sempeter pri Gorici (SI); KAMNIKAR, Tadej, 1000 Ljubljana (SI); STRMEC, Jernej, 8340 Crnomelj (SI); ZAVADLAV, Mitja, 5290 Sempeter pri Gorici (SI)
(74) Representative: BRP Renaud & Partner mbB Rechtsanwälte Patentanwälte Steuerberater

(57) **Abstract**

The present invention relates to an electric machine (1), in particular an electric motor (2), with a stator (4) and with a carrier (5), wherein the stator (4) is attached to the carrier (5).

Simplified and inexpensive manufacture and reduced weight of the electrical machine (1) result from the fact that the carrier (5) has an axially projecting flange (7), the stator (4) being pressed axially onto the flange (7) so that the stator (4) is attached to the flange (7) by means of a press fit.

## Description

The present invention relates to an electrical machine having a stator and a carrier to which the stator is attached.

An electric machine has a stator and a rotor which interact electromagnetically during operation so that the rotor rotates relative to the stator about an axis of rotation. The stator is thus stationary in the electrical machine. To achieve this, such electrical machines usually have a carrier to which the stator is attached.

Such an electric machine is known from WO 2019/002266 A1. The stator of the electric machine extends in a circumferential direction in a closed hollow-cylindrical manner. The carrier has a carrier plate, wherein the stator is attached to the carrier plate of the carrier via screw connections.

The present invention is concerned with the problem of providing an improved or at least different embodiment for an electrical machine of the type mentioned above, which in particular eliminates disadvantages from the prior art. In particular, the present invention is concerned with the problem of providing an improved or at least different embodiment for the electrical machine which is characterized by simplified and/or inexpensive manufacture and/or reduced weight.

This problem is solved according to the invention by the object of independent claim 1. Advantageous embodiments are the subject of the dependent claims.

Accordingly, the present invention is based on the general idea of attaching a stator of an electric machine to a carrier of the electric machine by means of a press fit. Thus, a reliable and stable as well as defined attaching of the stator within the electrical machine is achieved. Moreover, in this way no other separate connecting means, such as screws and the like, are necessary for attaching the stator to the carrier. This further leads to a simplified and cost-effective manufacture of the electrical machine, while at the same time reducing the weight of the electrical machine.

According to the idea of the invention, the electric machine has the stator as well as the carrier. The stator extends in a circumferential direction. The carrier has a radially extending carrier plate. The carrier also has a flange which projects axially from the carrier plate and extends in the circumferential direction. The stator is pressed axially onto the flange so that the stator is secured to the flange by means of a press fit.

The stator extends in the circumferential direction, preferably closed, and further in the axial direction. The stator is thus shaped in the manner of a hollow cylinder. The stator has an opening. Preferably, the flange is inserted into the opening and pressed on. The flange, form forming the press fit, preferably has an outer diameter which is greater than an inner diameter of the opening. Thus, it is preferred if the stator is arranged radially outside the flange.

The flange extends axially and is preferably closed in the circumferential direction. The flange is thus preferably shaped in the manner of a hollow cylinder. In particular, the flange is shaped in the manner of a nozzle.

The electric machine expediently further comprises a rotor. During operation, the rotor rotates about an axial axis of rotation. The carrier and the stator are stationary in the electric machine.

The directions given here refer to the axial axis of rotation. Thus, "axial" runs parallel, in particular coaxial, to the axis of rotation. Furthermore, the circumferential direction runs around the axis of rotation. In addition, "radial" runs transverse to the axis of rotation and thus transverse to the axial.

The stator advantageously has at least one coil, which in operation generates a magnetic and/or electromagnetic field to interact with the rotor.

The stator advantageously has teeth spaced apart in the circumferential direction. Preferably, such a coil is wound on the respective tooth.

In advantageous embodiments, the stator has axially successive and preferably mutually spaced lamellas or laminations. The lamellas are advantageously disc-shaped and annular and delimit the opening of the stator radially on the outside. In particular, the opening can be formed by the lamellas. The lamellas are advantageously arranged axially between the teeth and electrically separated from the coils.

Advantageous embodiments are those in which the stator, in particular the lamellas, are formed as a stack.

In advantageous embodiments, the lamellas are pressed onto the flange. Thus, when the stator is pressed onto the flange, wedging occurs between the lamellas and the flange, resulting in an improved press fit between the flange and the stator. As a result, the stator is attached to the carrier with increased stability.

In preferred embodiments, the lamellas and the flange are each electrically conductive and electrically connected to each other by the press fit. Consequently, the lamellas and the flange, in particular the carrier, are at the same electrical potential. Thus, it is possible in a simple and reliable manner to connect the stator and the flange, in particular the stator and the carrier, electrically at the same potential. Preferably, the stator and the carrier are electrically grounded in this way. This results in simple and reliable grounding of the stator and the carrier. The flange, in particular the carrier, are advantageously made of a metal or a metal alloy. For example, the flange, in particular the carrier, is made of aluminum or an aluminum alloy.

In principle, the press fit is sufficient for attaching the stator to the carrier.

In advantageous variants, the flange can have at least one projection on the side facing axially away from the carrier plate, which lies axially on the stator and thus fixes the stator axially on the flange in addition to the press fit. After the stator has been pressed onto the flange, the respective projection is deformed so that the projection lies axially on the stator. This results in a more stable and simple attaching of the stator to the carrier.

The respective projection preferably rests on the side of the stator facing away axially from the carrier plate. This results in simplified manufacture and stable attaching of the stator to the flange.

Before the stator is pressed onto the flange, the respective projection can project axially from the flange or be bent radially on the side facing away from the stator. After the stator has been pressed onto the flange, the respective projection is bent over, preferably radially, so that the projection lies axially on the stator.

In principle, the flange can have only one such projection. It is conceivable that the projection extends over at least 90° in the circumferential direction.

Preferred embodiments are those in which the flange has at least two such projections which are spaced apart in the circumferential direction and extend only locally in the circumferential direction, for example between 5° and 30°. This results in uniform axial fixing of the stator to the carrier on the side facing away from the carrier plate. Advantageously, the projections are evenly spaced from one another in the circumferential direction. In particular, it is conceivable that the flange has four such projections, which are spaced apart from one another by 90° in the circumferential direction.

Advantageous variants are those in which at least one of the at least one projections, preferably the respective projection, lies on one of the lamellas. In particular, the respective at least one projection rests on the outermost lamella on the side axially facing away from the carrier plate. Thus, there is a further electrical connection between the flange and the lamellas. In addition, the projection is in this way electrically separated from the coils of the stator and spaced apart from them. Accordingly, damage to the coils during manufacture of the electrical machine is avoided or at least reduced.

Preferably, the respective lamella on which at least one of the projections rests is rough on its side facing the projection, so that the projection and the lamella are further fixed to each other by static friction. This leads to further stabilization of the attachment of the stator to the carrier.

Preferably, at least one of the lamellas is rough in the area of the opening. This improved the attachment of the lamella to the flange.

Preferred are embodiments in which the roughness of the lamella is already caused by the manufacture of the lamella. In particular, the lamella has burrs. Thus, there is no need for separate processing of the lamella for the rough construction of the lamella. This leads to further reduced manufacturing costs of the electrical machine.

Particularly preferred are embodiments in which burrs extend away from the carrier plate in the area of the opening, wherein the burrs contact the flange. As a result, the burrs hinder the lamella and thus the stator from moving away from the carrier plate because they dig into the flange due to their orientation away from the carrier plate. Therefore, the burrs hinder the lamella and thus the stator from the flange is prevented or at least hindered. Hence, the stabilization of the attachment is further improved.

The lamellas can for instance be manufactured by cutting, milling and the like.

The burrs preferably result by punching the lamella in order to manufacture the opening.

Advantageous embodiments are those in which the flange has a radially outwardly projecting step in its region close to the carrier plate, preferably in the region of the side of the stator facing the carrier plate, on which the flange rests with its side facing the carrier plate. Consequently, the stator is in this way axially defined and clearly and easily positioned in the carrier. Furthermore, the flange is fixed to the carrier axially towards the carrier plate in addition to the press fit. This leads to a further stabilization of the attachment of the stator to the carrier. Preferably, the step runs closed in the circumferential direction, with the stator resting axially on the step in a closed manner in the circumferential direction.

Preferred are embodiments in which the flange has both the step and at least one projection, advantageously at least two projections spaced apart in the circumferential direction. Thus, by means of the flange and in addition to the press fit, the stator is axially fixed on both sides of the flange and thus on the carrier.

As explained above, the idea according to the invention makes it possible to dispense with separate elements, in particular screw connections, for attaching the stator to the carrier. Accordingly, it is preferred if the attaching of the stator to the carrier is free of screw connections.

In principle, the carrier can be designed in several parts, with the corresponding parts being manufactured separately and then joined together.

In advantageous embodiments, the carrier is manufactured in one piece and monolithically. Preferably, the carrier is molded. This results in a simple, cost-effective and mechanically stable design of the carrier.

Advantageous are embodiments in which the carrier is manufactured by means of die casting, preferably by means of pressure die casting, for example by injection molding. Thus, the carrier is manufactured inexpensively.

The carrier advantageously has a collar which projects axially from the carrier plate and extends in the circumferential direction. The collar serves to attach a shaft to the carrier so that the shaft is stationary in the electrical machine. In particular, the shaft serves for bearing, for example the rotor, in the electrical machine. The shaft extends axially and projects axially from the collar.

Preferably, the collar projects axially from the same side of the carrier plate as the flange.

A simplified attaching of the shaft to the carrier is advantageously achieved by a form fit between the collar and the shaft. This means that embodiments are preferred in which the shaft is attached in the collar by means of a form fit.

In preferred embodiments, the shaft is inserted as an insert in an associated tool during manufacture of the carrier, so that the shaft is attached to the collar by means of a form fit after manufacture. Thus, there is a particularly cost-effective manufacture of the electrical machine and at the same time stable attaching of the shaft in the collar.

Preferably, the carrier is manufactured by means of die casting, in particular injection molding, with the shaft being inserted as an insert in the die casting mold and being partially encapsulated, in particular overmolded, by the collar to produce the carrier. Thus, a particularly cost-effective manufacturing and at the same time mechanically stable attaching of the shaft in the collar are achieved.

An improved form fit of the collar with the shaft can be achieved by the shaft having an axially changing outer diameter in the collar.

Preferably, the shaft is stepped in the collar. This means that the outer diameter of the shaft changes in steps along the axial extension of the shaft. This leads to a particularly stable formation of the form fit and thus to a particularly stable attaching of the shaft in the collar.

Advantageous are embodiments in which the collar and thus the shaft are arranged inside the flange. In particular, the collar and the flange run concentrically.

The carrier plate can have at least one slot, preferably spaced from the flange, through which an electrical contact of the stator leads. The contact is advantageously an electrical contact of the coils of the stator. It is conceivable that the carrier plate has at least two such slots, which are spaced apart from one another, with an associated contact being guided through the respective slot.

The electric machine can be used in any application. In particular, the electric machine can be used as an electric motor.

It is conceivable to use the electric machine, in particular the electric motor, in a motor vehicle.

It is conceivable to use the electric motor as a fan in the motor vehicle. The fan can cool a drive unit, in particular an engine, of the motor vehicle.

Further important features and advantages of the invention are apparent from the subclaims, from the drawings, and from the accompanying Figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

The Figures show, each schematically
- Fig. 1: an isometric view of an electrical machine with a stator and a carrier,
- Fig. 2: an isometric, sectional view of the electric machine,
- Fig. 3: a stepped section through the electric machine,
- Fig. 4: the section from Figure 3 without the stator,
- Fig. 5: an isometric, sectional view of the carrier with a shaft,
- Fig. 6: an isometric view of the electric machine towards the side of the carrier averted from the stator,
- Fig. 7: a section through the electric machine.

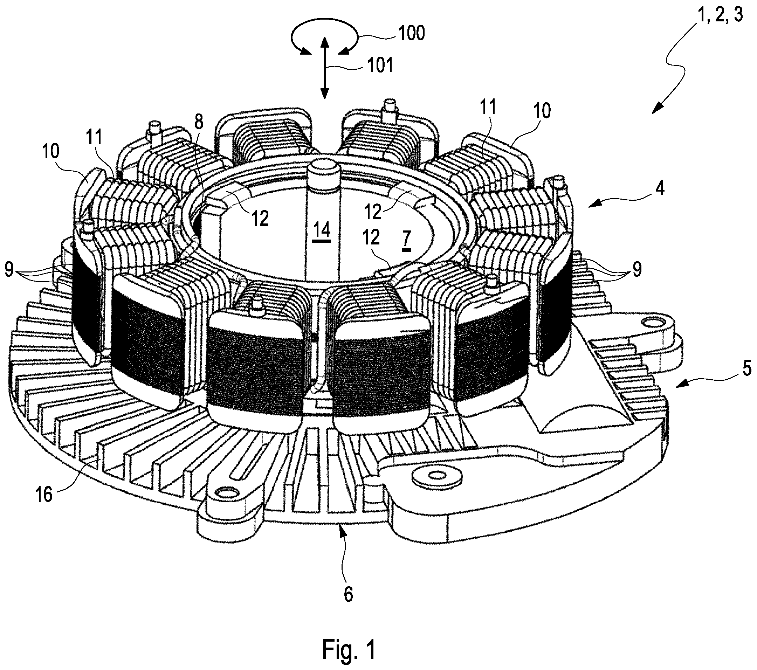

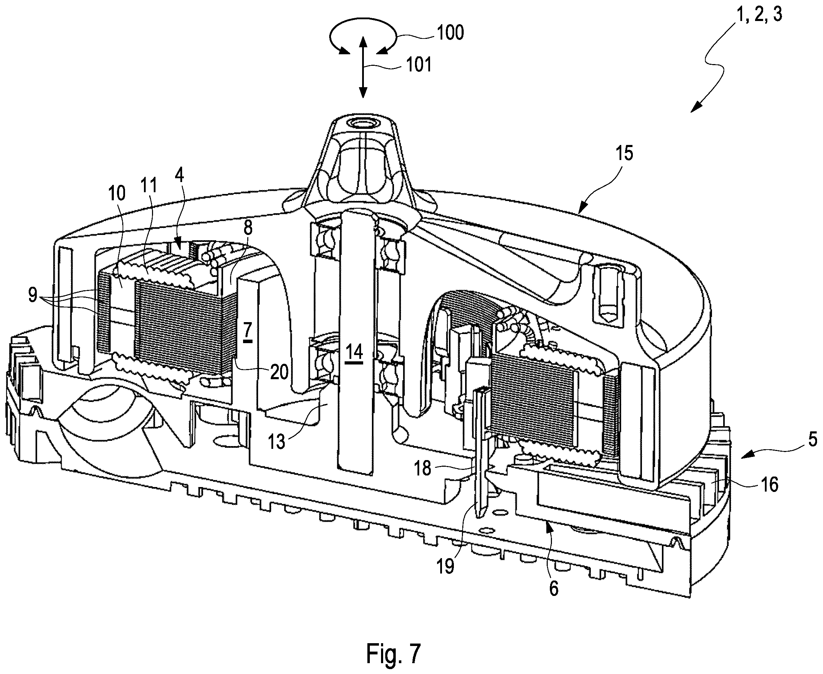

An electric machine 1, such as shown in Figures 1 to 7, has a stator 4, a carrier 5, and a rotor 15. The carrier 5 is shown in Figures 1 to 7. The stator 4 is shown only in Figures 1 to 3 and Figures 6 and 7. In the exemplary embodiments shown, the electric machine 1 is designed as an electric motor 2. As can be seen in Figure 7, the electric motor 2 can be designed as a fan 3, for example for a drive unit of a motor vehicle that are not shown.

The stator 4 extends in a circumferential direction 100 and has a radially outwardly limited opening 8. The stator 4 extends axially and is closed in the circumferential direction 100 and is thus formed in the hollow-cylindrical manner. The carrier 5 has a radially extending carrier plate 6.

The directions indicated herein refer to an axial axis of rotation 101 of the rotor 15. Accordingly, "axial" means parallel, in particular coaxial to the axis of rotation 101. Furthermore, the circumferential direction 100 runs surrounding the axis of rotation 100. Moreover, "radial" runs transversely to the axis of rotation 100.

The carrier 5 has a flange 7 which projects axially from the carrier plate 6 and extends in the circumferential direction 100. In the exemplary embodiments shown, the flange 7 extends closed in the circumferential direction 100 and is thus shaped in the manner of a hollow cylinder. The stator 4 is axially pressed onto the flange 7, so that the stator 4 is attached to the flange 7 by means of a press fit. The flange 7 is thus inserted into the opening 8 of the stator 4 and pressed on. Consequently, the stator 4 is arranged radially on the outside of the flange 7. The attaching of the stator 4 to the flange 7 by means of the press fit represents a simple, stable and reliable attaching of the stator 4 to the carrier 5. Consequently, screw connections for attaching the stator 4 to the carrier 5 can also be dispensed with. Following this, the attaching of the stator 4 to the carrier 5 in the shown exemplary embodiments and preferably is free of screw connections.

In the exemplary embodiments shown, the stator 4 is formed as a pack or stack. The stator 4, In the exemplary embodiments, has teeth 10 spaced apart from one another in the circumferential direction 100. A coil 11 is wound on each of the teeth 10. In the exemplary embodiments shown, the stator 4 further has axially successive lamellas 9 which delimit the opening 8 of the stator radially on the outside. The lamellas 9 are disc-shaped and annular and closed in the circumferential direction 100. In addition, the lamellas 9 are arranged axially between the teeth 10 and are electrically separated from the coils 11.

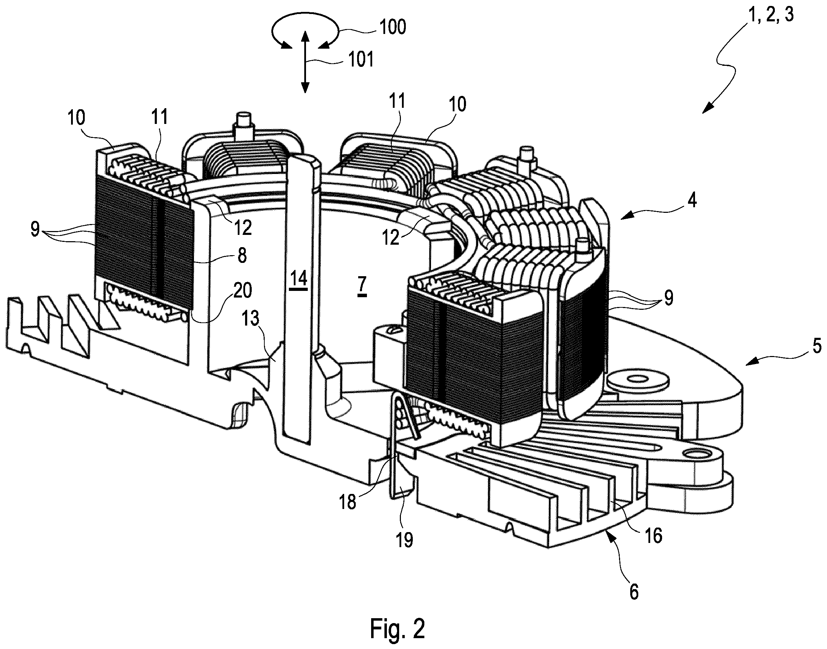

As can be seen, for example, from Figure 2, in the exemplary embodiments shown the lamellas 9 are pressed onto the flange 7. The lamellas 9 thus lie radially on the outside of the flange 7. The flange 7, in particular the carrier 5, and the lamellas 9 are electrically conductive. As a result, the lamellas 9 and the flange 7 are electrically connected to each other by means of the press fit. Consequently, the lamellas 9 and the flange 7 are at the same electrical potential. Thus, it is particularly possible to ground the lamellas 9 and thus the stator 4 in a simple and reliable manner. Consequently, it is preferred if the lamellas 9 and the flange 7 are grounded during operation.

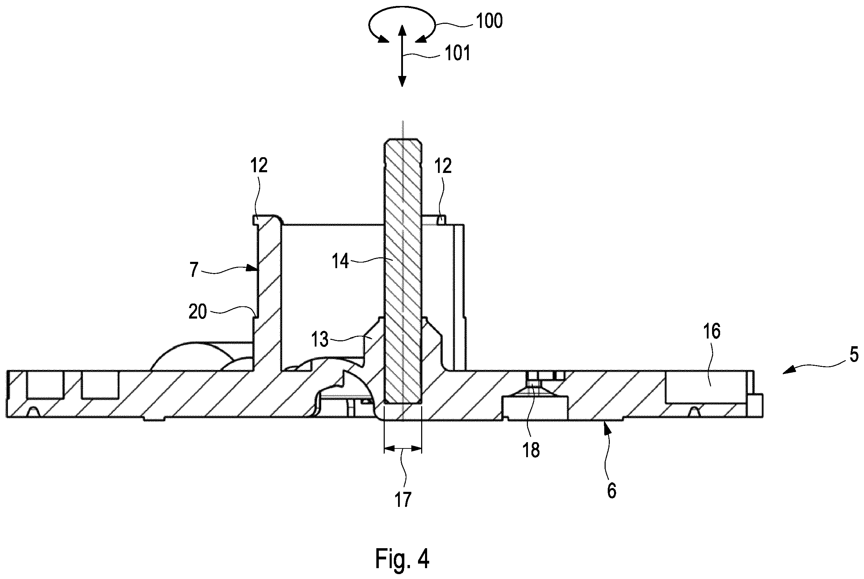

In the exemplary embodiments shown, the flange 7, as can be seen for example from Figures 2 and 4, has at least one projection 12 on the side facing axially away from the carrier plate 6, which projection 12 extends locally in the circumferential direction 100 in the exemplary embodiments shown, i.e., only over a partial section of the flange 7. As can further be seen from the Figures, after the stator 4 has been pressed onto the flange 7, the projection 12 is deformed so that the projection 12 lies axially on the stator 4 and thus fixes the stator 4 axially to the flange 7 in addition to the press fit. That is, the projection 12 projects axially or radially inwardly when the stator 4 is pressed onto the flange 7 and is bent radially outwardly after the stator 4 has been pressed on, so that the projection 12 rests on the side of the stator 4 facing away from the carrier plate 6. As can be seen from the Figures, the flange 7 may have at least two such projections 12, which are evenly spaced apart from one another in the circumferential direction 100. In the exemplary embodiments shown, the flange 7 has four such projections 12 evenly distributed in the circumferential direction. As can be seen, for example, from Figure 2, in the exemplary embodiments shown the respective projection 12 rests on one of the lamellas 9, namely on outer side of the outermost lamella 9 facing axially away from the carrier plate 6. The lamella 9 is rough (not shown) on its outer side axially facing the projection 12, so that the projection 12 and the lamella 9 are further fixed to each other by static friction. The rough formation of the lamella 9 is preferably due to the manufacture of the lamella 9, so that no additional processing steps are necessary to roughen the lamella 9.

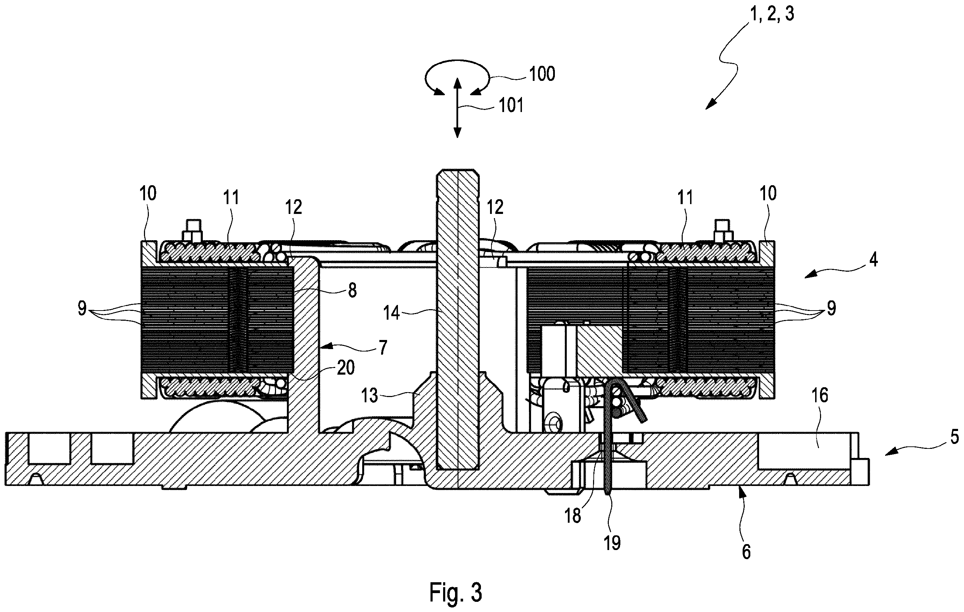

As can be seen, for example, from Figure 3, the flange 7 in the exemplary embodiments shown has a step 20 axially adjacent to the carrier plate 6, projecting radially outward and extending in the circumferential direction 100. The stator 4, in particular the axially outermost lamella 9 towards the carrier plate 6, rests on the step 20. Thus, in addition to the press fit, the stator 4 is axially fixed to the flange 7. By means of the step 20 and the at least one projection 12, the stator 4 is thus fixed axially on both sides of the flange 7 in addition to the press fit. The step 20 further defines an axial position of the stator 4 on the flange 7 and thus in the electric machine 1.

As can be seen, for example, from Figure 1, the carrier plate 6 in the exemplary embodiments shown has a ribbed cooling structure 16 on the side axially facing the stator 4.

In the exemplary embodiments shown, the carrier 5 is designed and manufactured monolithically and in one piece. Advantageously, the carrier 5 is of molded, preferably manufactured by means of pressure die casting.

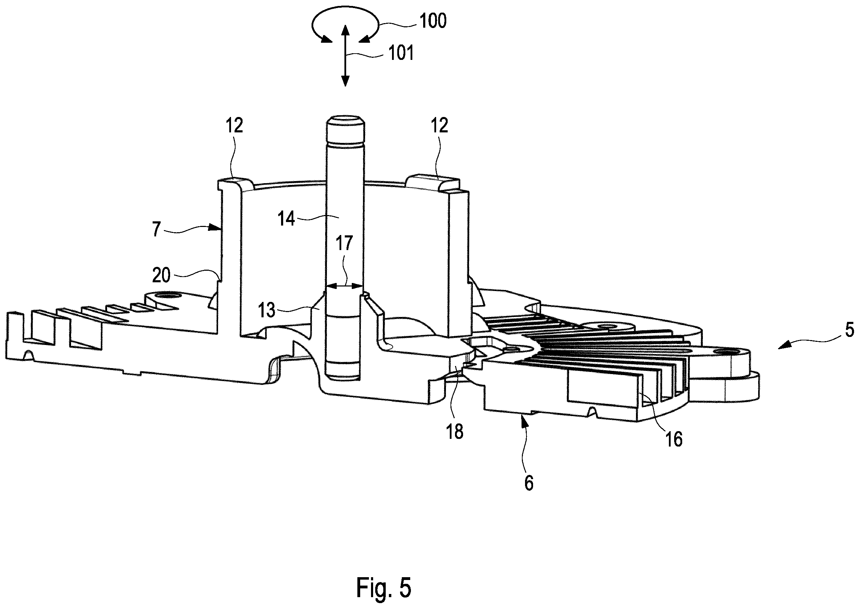

As can be seen, for example, from Figures 4 and 5, the carrier 5 in the exemplary embodiments shown has a collar 13 which projects axially from the carrier plate 6 and extends in a hollow cylindrical manner in the circumferential direction 100. In the exemplary embodiments shown, the collar 13 is arranged within the flange 7. The electrical machine 1 further has a shaft 14, which is attached in the collar 13 by means of a form fit. The shaft 14 extends axially and projects out of the collar 13. The shaft 14 further projects out of the stator 4. As can be seen from Figure 7, the shaft 14 serves for bearing, in the embodiment example shown for bearing the rotor 15. The form fit between the shaft 14 and the collar 13 in the exemplary embodiments shown is implemented during the manufacture of the carrier 5. In this case, the shaft 14 is inserted as an insert in an associated tool (not shown) during the manufacture, in particular during the pressure die casting, of the carrier 5, so that the shaft 14 is fixed in the collar 13 by means of a form fit after the manufacture of the carrier 5 comprising the collar 13. As shown only in Figure 5, the shaft 14 in the exemplary embodiments shown has an axially varying outer diameter 17, so that the shank 14 is stepped within the collar 13. This results in an improved form fit between the shaft 4 and the collar 13.

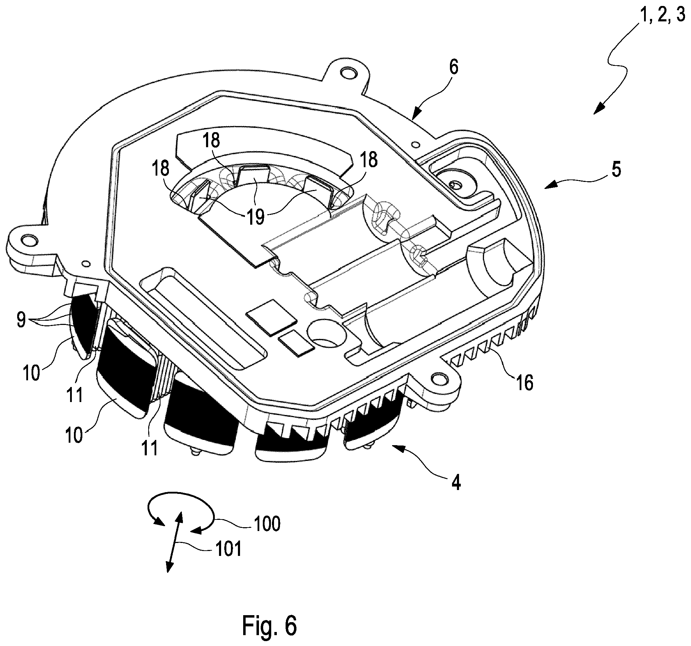

As can be seen, for example, from Figure 6, the carrier plate 6 in the exemplary embodiments shown has at least one slot 18 radially spaced from the flange 7, through which an electrical contact 19 of the stator 4 leads. Figure 6 shows an isometric view towards a side of the carrier 5 facing away from the stator 4. In the exemplary embodiments shown, the contact 19 is an electrical contact 19 of the coils 11. In the exemplary embodiments shown, the stator 4 has a total of three phases. In addition, the stator 4 has an associated contact 19 for each phase, so that the stator 4 in the exemplary embodiments shown has three such contacts 19. The contacts 19 are electrically separated from one another and are each guided through an associated slot 18. Thus, an electrical connection and supply of the stator 4 are made possible in a simple manner.

## Claims

1. Electric machine (1), in particular electric motor (2),
- with a stator (4) extending in a circumferential direction (100),
- with a carrier (5) which has a radially extending carrier plate (6),
- wherein the stator (4) is attached to the carrier (5),
**characterized in that**
- the carrier (5) has a flange (7) which projects axially from the carrier plate (6) and extends in the circumferential direction (100),
- the stator (4) is axially pressed onto the flange (7) so that the stator (4) is attached to the flange (7) by means of a press fit.

2. Electric machine according to claim 1,
**characterized in that**
- the stator (4) has axially successive lamellas (9) which delimit an opening (8) of the stator (4) radially outwardly,
- the lamellas (9) are pressed onto the flange (7).

3. Electrical machine according to claim 2,
**characterized in that**
the flange (7) and the lamellas (9) are electrically conductive and electrically connected to each other by means of the press fit, so that the lamellas (9) are at the same electrical potential with the flange (7), in particular are grounded.

4. Electric machine according to one of the claims 1 to 3,
**characterized in that**
the flange (7) has at least one projection (12) on the side axially facing away from the carrier plate (6), which projection (12) is deformed after the stator (4) has been pressed onto the flange (7), so that the projection (12) lies axially on the stator (4) and thus fixes the stator (4) axially on the flange (7) in addition to the press fit.

5. Electric machine according to claim 3 and 4,
**characterized in that**
at least one of the at least one projections (12) lies on one of the lamellas (9).

6. Electric machine according to claim 5,
**characterized in that**
the lamella (9) is rough on its outer side axially facing the projection (12), so that the projection (12) and the lamella (9) are further fixed to each other by static friction.

7. Electrical machine according to any one of claims 2 to 6,
**characterized in that**
at least one of the lamella (9) has burrs extending away from the carrier plate (6) in the area of the opening (8) , wherein the burrs contact the flange (7).

8. Electric machine according to any one of claims 4 to 7,
**characterized in that**
the flange (7) has at least two such projections (12) which are spaced apart in the circumferential direction (100).

9. Electric machine according to one of claims 1 to 8,
**characterized in that**
the flange (7) has a radially outwardly projecting step (20) on which the stator (4) rests axially on the side facing the carrier plate (6).

10. Electrical machine according to one of the claims 1 to 9,
**characterized in that**
the carrier (5) is manufactured in one piece and monolithically, in particular it is molded.

11. Electrical machine according to claim 10,
**characterized in that**
the carrier (5) is manufactured by means of pressure die casting.

12. Electric machine according to any one of claims 1 to 11,
**characterized in that**
- the carrier (5) has a collar (13) which projects axially from the carrier plate (6) and extends in the circumferential direction (100),
- **in that** a shaft (14) is attached in the collar (13) by means of a form fit,
- that the shaft (14) extends axially and projects axially from the collar (13).

13. Electrical machine according to claim 12 and any one of claims 10 or 11, **characterized in that**
the shaft (14) is inserted as an insert in an associated tool when the carrier (5) is manufactured, so that the shaft (14) is fixed in the collar (13) by means of the form fit after manufacture.

14. Electrical machine according to claim 12 or 13,
**characterized in that**
the shaft (14) in the collar (13) has an axially changing outer diameter (17) for forming the form fit.

15. Electrical machine according to claim 14,
**characterized in that**
the shaft (14) is stepped in the collar (13).
